# EUROPÄISCHE PATENTSCHRIFT

(11) **EP 3 465 077 B1**
(45) Veröffentlichungstag und Bekanntmachung des Hinweises auf die Patenterteilung: **25.03.2020**
(21) Anmeldenummer: 17780988.6
(22) Anmeldetag: 24.07.2017
(51) Int. Cl.: G01B 11/16, G01L 1/24, G01D 5/353, G02B 6/02

(54) **ANSCHWEISSBARE FBG-DEHNUNGSSENSORANORDNUNG**
WELD-ON FBG STRAIN SENSOR ARRANGEMENT
AGENCEMENT DE CAPTEUR DE DÉFORMATION FBG À SOUDER

(30) Priorität: 30.11.2016 DE 102016014280
(43) Veröffentlichungstag der Anmeldung: 10.04.2019
(73) Patentinhaber: Hottinger Baldwin Messtechnik GmbH, 64293 Darmstadt (DE)
(72) Erfinder: MAUL, Jochen, 55118 Mainz (DE); KIPP, Tobias, 64283 Darmstadt (DE); GÜNTHER, Bernd, 76185 Karlsruhe (DE); CABRAL BOBIÃO GIRÃO, Maria Marta, 4465-593 Leça do Balio (PT); MOITA ARAÚJO, Francisco Manuel, 4450-296 Matosinhos (PT)
(74) Vertreter: Staudte, Ralph
(86) Internationale Anmeldenummer: PCT/DE2017/000225
(87) Internationale Veröffentlichungsnummer: WO 2018/099501

(56) Entgegenhaltungen:
- EP-A2- 1 148 324
- US-A1- 2002 009 252
- US-A1- 2003 066 356

## Beschreibung

Die Erfindung betrifft eine anschweißbare FBG-Dehnungssensoranordnung, die aufgrund ihrer einfach zu variierenden und kostengünstigen Konstruktion vielseitig einsetzbar ist.

Dehnungen von Materialoberflächen können z. B. mit Dehnungssensoren gemessen werden, die auf diesen Oberflächen befestigt sind. Wird die Oberfläche gedehnt oder gestaucht, werden dadurch auch die Dehnungssensoren beeinflusst, sodass ein Messsignal erzeugt wird.

In vielen Fällen werden als Dehnungssensoren sogenannte Dehnungsmessstreifen verwendet, die mittels eines Klebstoffs auf der zu messenden Oberfläche befestigt werden. Diese Dehnungsmessstreifen bestehen aus einem mit Epoxidharz getränkten Papier oder einem Glasfasergewebe, auf dem eine dünne Metallfolie befestigt ist. Dehnungsmessstreifen dieser Art sind sehr vielseitig einsetzbar, weil sie an nahezu jeder beliebigen Stelle eines Werkstücks befestigt werden können. Von Nachteil ist jedoch der hohe Aufwand bei der Befestigung. Es gibt aber Situationen, in denen solche sogenannten Metallfolien-Dehnungsmessstreifen nicht einsetzbar sind. So müssen bei deren Befestigung bestimmte Parameter wie Umgebungs- und Werkstücktemperatur und Luftfeuchtigkeit eingehalten werden. Auch nach der Befestigung des Dehnungsmessstreifens muss die Messstelle vor mechanischer Beschädigung und dem Eindringen von Feuchtigkeit geschützt werden. Das wird durch Schutzabdeckungen erreicht. Gegen das Eindringen von Feuchtigkeit wird eine Klebefolie mit einer darin eingebetteten Wasserdampfsperre aus Aluminium verwendet. Bei großen Temperaturschwankungen kann sich dieser Feuchtigkeitsschutz jedoch ablösen. Bei dynamischen Messungen entstehen an der Messstelle Scherkräfte, die ebenfalls das Ablösen dieses Feuchtigkeitsschutzes bewirken können. Wenn zusätzlich noch ein Schutz vor mechanischer Berührung erforderlich ist, wird über der Messstelle ein Gehäuse aus einem mechanisch widerstandsfähigen Material befestigt.

Um die vorstehend beschriebenen aufwendigen Montageschritte zu vermeiden, werden bereits gekapselte anschweißbare Dehnungssensoren eingesetzt, wie z. B. in den Dokumenten DE 2658324 C2, EP 1148324 A2, JP 4519703 B2 und DE 10335337 A gezeigt.

In dem Dokument DE 10335337 A1 ist ein sogenannter Vielzweck-Dehnungssensor beschrieben. Dieser Vielzweck-Dehnungssensor ist mechanisch robust und gut gegen Feuchtigkeit geschützt, aber kompliziert aufgebaut, wie in der Fig. 1 des Dokuments DE 10335337 A1 erkennbar ist.

Die Aufgabe der vorliegenden Erfindung besteht in der Bereitstellung einer robusten Dehnungssensor-Konstruktion, die jedoch im Vergleich zum Stand der Technik einen wesentlich einfacheren Aufbau aufweist.

Die Aufgabe wird mit einer FBG-Dehnungssensoranordnung nach Anspruch 1 gelöst, die einen Sensorträger aus Stahlblech aufweist, auf dem wenigstens ein FBG-Dehnungssensor befestigt ist. Der FBG-Dehnungssensor ist eine optische Faser mit zwei Endabschnitten, zwischen denen wenigstens ein Bragg-Gitter vorgesehen ist. An jedem der Endabschnitte ist eine optische Leitung angekoppelt, um die erzeugten Messsignale signaltechnisch weiterzuleiten. Die optische Faser mit dem Bragg-Gitter und die Koppelstellen sind von einer Schutzabdeckung umgeben und mit dieser verklebt.

Diese Schutzabdeckung weist folgende Merkmale auf:
- Entlang der optischen Faser ist die Schutzabdeckung dünn und schmal ausgebildet und mit dem Sensorträger verklebt, so dass die optische Faser auf diesem fixiert und von oben geschützt ist.
- An jedem der beiden Endabschnitte der optischen Faser, d. h. im Bereich der jeweiligen Koppelstelle mit der Signalleitung, ist die Schutzabdeckung vergrößert ausgeführt und ebenfalls mit dem Sensorträger verklebt.
- In einem unter der Schutzabdeckung vorhandenen Hohlraum ist ein elastischer Füllkörper angeordnet.

### Die Schutzabdeckung hat eine Mehrfachfunktion:

Entlang der optischen Faser mit dem Bragg-Gitter dient die Schutzabdeckung zur Befestigung der optischen Faser auf dem Sensorträger und bietet gleichzeitig einen relativ guten Schutz gegen Berührung. Die dünnen Wände am vergrößerten Teil der Schutzabdeckung dienen zur Aufnahme von Dehnungsdifferenzen, die durch unterschiedliche thermische Ausdehnungskoeffizienten von Stahl und Kunststoff entstehen. Würde jeder der beiden vergrößerten Endabschnitte der Abdeckung vollständig aus Kunststoff bestehen und sich kein Hohlraum darunter befinden, könnte es durch die unterschiedlichen Materialdehnungen zu einer Ablösung des Sensorträgers von der Werkstückoberfläche kommen, sodass dann lediglich entlang der optischen Faser mit dem Bragg-Gitter eine mechanische Verbindung zwischen dem Sensorträger und der Werkstückoberfläche bestehen bleiben würde. In diesem Fall würde schon bei einer geringen mechanischen Belastung der Sensor zerstört werden. Weiterhin sind die dünnwandigen vergrößerten Endabschnitte der Abdeckung mit elastischen Füllkörpern ausgefüllt. Der Grund ist folgender: Bei dynamischen Messungen könnten die Enden der optischen Faser bei bestimmten Frequenzen zu mechanischen Schwingungen angeregt werden. Das würde zu einem Bruch der optischen Faser führen und somit den Totalausfall des Sensors bewirken.

Bei einer vorteilhaften Weiterbildung der FBG-Dehnungssensoranordnung nach Anspruch 2 ist der Sensorträger im Bereich der optischen Faser schmaler als im Bereich der vergrößerten Endabschnitte der Schutzabdeckung. Dadurch verringert sich das Gewicht und somit das Massenträgheitsmoment des Sensorträgers, was bei dynamischen Messungen die Belastung der Schweißpunkte zwischen dem Sensorträger und der Werkstückoberfläche verringert.

Bei einer vorteilhaften Weiterbildung der FBG-Dehnungssensoranordnung nach Anspruch 3 besteht die Schutzabdeckung aus Epoxidharz. Epoxidharz besitzt ausgezeichnete Klebeeigenschaften, eine hohe Festigkeit und eine hohe Beständigkeit gegen Feuchtigkeit und aggressive Umwelteinflüsse.

Bei einer vorteilhaften Weiterbildung der FBG-Dehnungssensoranordnung nach Anspruch 4 ist die Schutzabdeckung halbkreisförmig ausgebildet. Dadurch wird eine aus der Statik bekannte hohe Widerstandsfähigkeit gegenüber äußerem Druck erzielt.

Bei einer vorteilhaften Weiterbildung der FBG-Dehnungssensoranordnung nach Anspruch 5 weisen die optischen Signalleitungen eine Stahlarmierung auf. Damit wird die Robustheit der FBG-Dehnungssensoranordnung insgesamt erhöht.

Bei einer vorteilhaften Weiterbildung der FBG-Dehnungssensoranordnung nach Anspruch 6 ist die Schutzabdeckung im Bereich des Bragg-Gitters maximal 3-mal so breit und maximal 2,5-mal so dick wie der Durchmesser der optischen Faser. Dadurch wird die Messgenauigkeit verbessert.

Bei einer vorteilhaften Weiterbildung der FBG-Dehnungssensoranordnung nach Anspruch 7 ist der Sensorträger als Dreieck ausgebildet, und auf jedem Schenkel des Dreiecks ist ein FBG-Dehnungssensor befestigt.

Bei einer vorteilhaften Weiterbildung der FBG-Dehnungssensoranordnung nach Anspruch 8 ist der Sensorträger als Rechteck ausgebildet, und auf jeder Seite des Rechtecks ist ein FBG-Dehnungssensor befestigt.

Die Weiterbildungen nach den Ansprüchen 7 und 8 zeigen, dass z. B. durch Laserschneidverfahren beliebige Formen und Größen des Sensorträgers herstellbar sind.

Die Erfindung wird nachfolgend anhand von Ausführungsbeispielen und Zeichnungen näher erläutert:
- Fig. 1: zeigt in perspektivischer Ansicht eine anschweißbare Dehnungssensoranordnung und zwei Schnittansichten A-A und B-B davon.
- Fig. 2: zeigt einen dreieckigen Sensorträger mit 3 darauf befestigten FBG-Dehnungssensoren.
- Fig. 3: zeigt einen quadratischen Sensorträger mit 4 darauf befestigten FBG-Dehnungssensoren.
- Fig. 4: zeigt symbolisch die Sicherheit der FBG-Dehnungssensoranordnung gegen Tritt-Belastung.

### Bezugszeichenliste

- 1: anschweißbare Dehnungssensoranordnung
- 2: FBG-Dehnungssensor
- 3a, 3b: Signalleitungen
- 4: Sensorträger
- 5: Schutzabdeckung
- 6: Füllkörper
- 7: Schweißpunkte
- 8: Kleberand der Schutzabdeckung
- W: Wandstärke der Schutzabdeckung
- D: Dicke der Schutzabdeckung

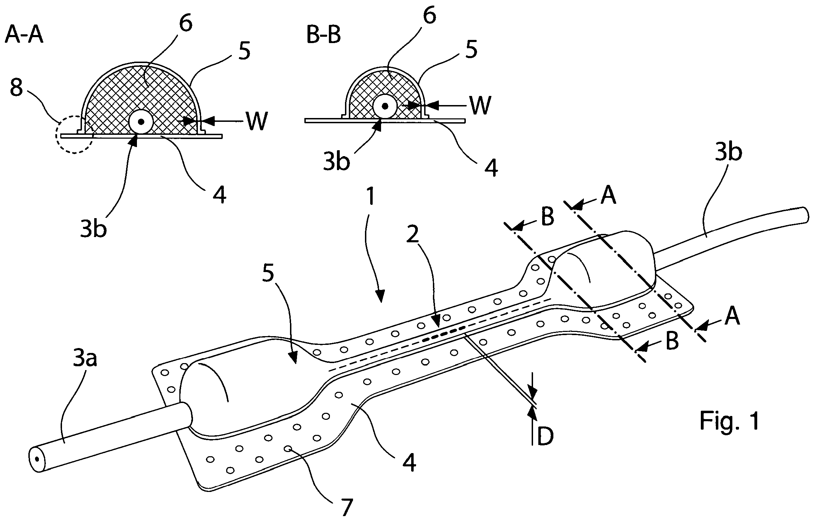

Die Fig. 1 zeigt in perspektivischer Ansicht eine anschweißbare Dehnungssensoranordnung 1. Eine optische Faser mit einem FBG-Dehnungssensor 2 ist als gestrichelte Linie dargestellt und an ihren beiden Endabschnitten zur Leitung eines optischen Messsignals mit stahlarmierten Signalleitungen 3a, 3b mechanisch verbunden und signaltechnisch gekoppelt. Die Stahlarmierung dient dazu, die Dehnungssensoranordnung mechanisch robust auszubilden. Die optische Faser mit dem FBG-Dehnungssensor 2 ist auf einem Sensorträger 4 aus Stahlblech aufgeklebt. Das Stahlblech hat bei diesem Ausführungsbeispiel eine Dicke von 0,1 mm und eine Zugfestigkeit von 884 N/mm².

Die optische Faser mit dem FBG-Dehnungssensor 2 und Koppelstellen zu den Signalleitungen 3a, 3b sind durchgehend mit einer Schutzabdeckung 5 aus einem festen Kunststoff abgedeckt. Im vorliegenden Ausführungsbeispiel wird Epoxidharz verwendet, da es besonders fest und alterungsbeständig ist. Die Schutzabdeckung 5 ist mit dem Sensorträger 4 an jeder Stelle fest verbunden.

Im Bereich der optischen Faser mit dem FBG-Dehnungssensor 2 ist die Schutzabdeckung 5 schmal und flach ausgebildet. Bei dem vorliegenden Ausführungsbeispiel hat die Schutzabdeckung 5 in diesem Bereich eine Breite von 2 mm und eine Dicke D von 0,5 mm.

Im Bereich der optischen Faser mit dem FBG-Dehnungssensor 2 ist der Sensorträger 4 schmaler ausgebildet als an seinen Endabschnitten. Bei dem vorliegenden Ausführungsbeispiel haben die Endabschnitte des Sensorträgers eine Breite von 23 mm, während der Abschnitt zwischen den Endabschnitten nur 11 mm breit ist. Damit wird eine gute Übertragung der Dehnung des Werkstücks auf den FBG-Sensor erreicht.

An jedem der beiden Endabschnitte der optischen Faser, d. h. an den Koppelstellen mit den Signalleitungen 3a und 3b, ist die Schutzabdeckung vergrößert ausgeführt und ebenfalls mit dem Sensorträger verklebt. Aus den Schnittansichten in der Fig. 1 ist entnehmbar, dass die Schutzabdeckung halbkreisförmig und dünnwandig ausgeführt ist. Bei diesem Ausführungsbeispiel beträgt die Wandstärke W im Bereich der beiden Endabschnitte 0,5 mm, d. h. sie ist genauso groß wie die Dicke D der Schutzabdeckung im Bereich der optischen Faser mit dem FBG-Dehnungssensor 2. In dem unter der halbkreisförmigen Schutzabdeckung vorliegenden Hohlraum ist ein elastischer Füllkörper 6 angeordnet, der die Funktion eines Schwingungsdämpfers hat. Bei Dehnungsmessungen, die zusätzlich von mechanischen Schwingungen überlagert werden, ist eine Schwingungsdämpfung besonders vorteilhaft.

Die Schnittdarstellungen A-A und B-B zeigen den Querschnitt der halbkreisförmigen Schutzabdeckung entlang der Schnittlinien A-A und B-B in der perspektivischen Darstellung der Dehnungssensoranordnung von Fig. 1. Es ist erkennbar, dass der Füllkörper 6 den Hohlraum der halbkreisförmigen Schutzabdeckung ausfüllt.

Mit Bezugszeichen 7 sind noch fiktive Schweißpunkte angegeben, die beim Befestigen des Sensorträgers 4 auf einer Werkstückoberfläche mittels Punktschweißen entstehen würden.

Mit Bezugszeichen 8 ist ein abgewinkelter Kleberand gezeigt, der die dünne halbkreisförmige Schutzabdeckung 5 mit dem Sensorträger 4 verbindet und sicherstellt, dass keine Undichtigkeit entsteht.

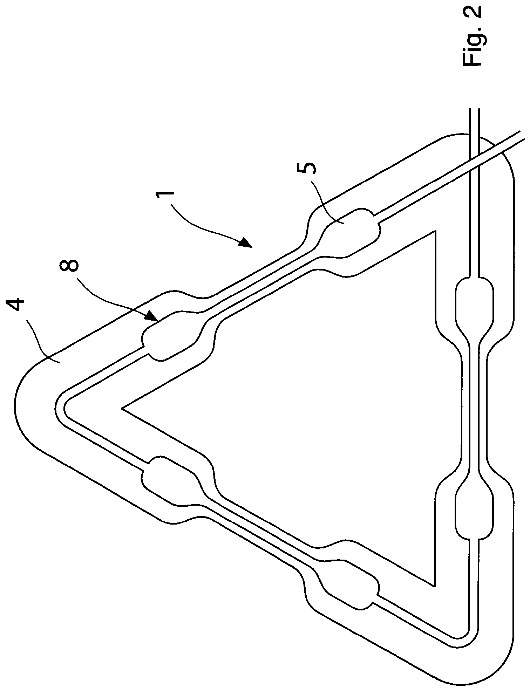

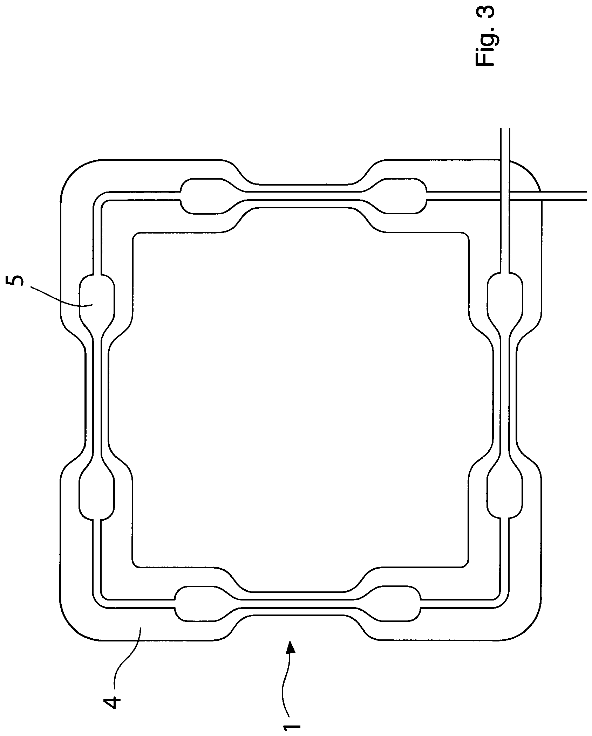

Der besondere Vorteil dieser FBG-Dehnungssensoranordnung liegt in dem sehr einfachen Aufbau und ihrer leichten Variierbarkeit in der Form. Der Sensorträger 4 kann mittels Laserschneidverfahren in unterschiedlichsten Formen kostengünstig hergestellt werden. Ebenso kann die Abdeckung, die durchgehend aus dem gleichen Material, vorzugsweise aus einem widerstandsfähigen Kunststoff, besteht, leicht hergestellt werden. Die Fig. 2 und 3 zeigen nur zwei der vielen Gestaltungsmöglichkeiten des Sensorträgers und somit der FBG-Dehnungssensoranordnung.

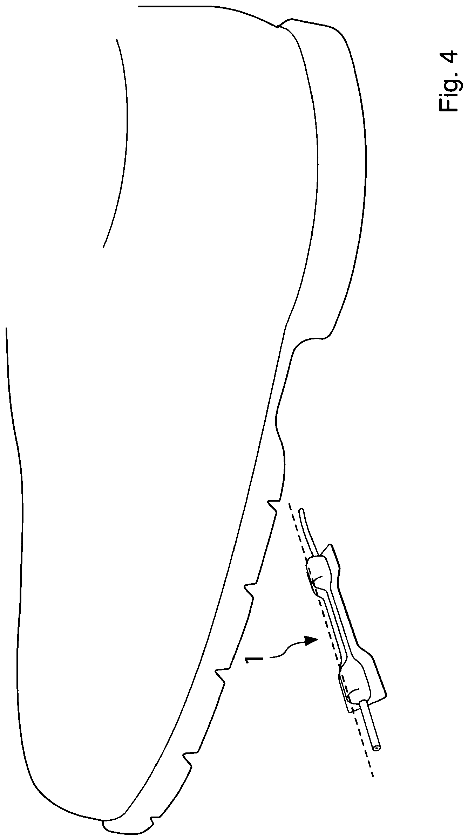

Die Stahlarmierung der Signalleitungen 3a, 3b und die halbkreisförmige Wölbung der Abdeckung bieten einen guten Schutz des Sensors vor einer flächigen mechanischen Berührung, z. B. durch Schuhe wie in Fig. 4 symbolisch dargestellt. Daher kann oft auf zusätzliche und aufwendige Schutzmaßnahmen verzichtet werden.

## Patentansprüche

1. FBG-Dehnungssensoranordnung (1) mit einem Sensorträger (4) aus Stahlblech und wenigstens einem darauf befestigten FBG-Dehnungssensor (2), wobei
- der FBG-Dehnungssensor (2) eine optische Faser mit zwei Endabschnitten aufweist, zwischen denen wenigstens ein Bragg-Gitter vorgesehen ist, und an jedem der Endabschnitte eine optische Signalleitung (3a, 3b) zur Weiterleitung des Messsignals angekoppelt ist und
- eine Schutzabdeckung (5) vorgesehen ist, die folgende Merkmale aufweist:
-- entlang der optischen Faser ist die Schutzabdeckung (5) dünn und schmal ausgebildet und mit dem Sensorträger (4) verklebt, sodass die darunter liegende optische Faser mit dem Bragg-Gitter auf dem Sensorträger (4) fixiert ist,
-- an jedem der beiden Endabschnitte der optischen Faser, d. h. an der jeweiligen Koppelstelle mit der Signalleitung (3a, 3b), ist die Schutzabdeckung vergrößert ausgeführt, sodass darunter ein Hohlraum ausgebildet ist, und
-- die Ränder der vergrößerten Schutzabdeckung sind ebenfalls mit dem Sensorträger verklebt,
wobei
- in dem Hohlraum ein elastischer Füllkörper (6) angeordnet ist, der die Koppelstelle schwingungsdämpfend einbettet.

2. FBG-Dehnungssensoranordnung (1) nach Anspruch 1, wobei der Sensorträger (4) im Bereich der optischen Faser schmaler ist als im Bereich des vergrößerten Teils der Schutzabdeckung.

3. FBG-Dehnungssensoranordnung (1) nach Anspruch 1, wobei die Schutzabdeckung aus Epoxidharz besteht.

4. FBG-Dehnungssensoranordnung (1) nach Anspruch 1, wobei die Schutzabdeckung halbkreisförmig ausgebildet ist.

5. FBG-Dehnungssensoranordnung (1) nach Anspruch 1, wobei die optischen Signalleitungen (3a, 3b) eine Stahlarmierung aufweisen.

6. FBG-Dehnungssensoranordnung (1) nach Anspruch 1, wobei wenigstens im Bereich des Bragg-Gitters die Schutzabdeckung maximal 3-mal so breit und maximal 2,5-mal so dick wie der Durchmesser der optischen Faser mit dem Bragg-Gitter ausgebildet ist.

7. FBG-Dehnungssensoranordnung (1) nach Anspruch 1, wobei der Sensorträger (4) als Dreieck ausgebildet ist und auf jedem Schenkel des Dreiecks ein FBG-Dehnungssensor (2) befestigt ist.

8. FBG-Dehnungssensoranordnung (1) nach Anspruch 1, wobei der Sensorträger (4) als Rechteck ausgebildet ist und auf jeder Seite des Rechtecks ein FBG-Dehnungssensor (2) befestigt ist.

## Claims

1. FBG strain sensor arrangement (1) with a sensor carrier (4) of steel sheet, and at least one FBG strain sensor (2) fastened thereto, wherein
- the FBG strain sensor (2) has an optical fibre with two end portions, between which at least one Bragg grating is provided, and an optical signal line (3a, 3b) is coupled at each of the end portions for transmission of the measurement signal, and
- a protective cover (5) is provided, which comprises the following features:
-- along the optical fibre, the protective cover (5) is configured thin and narrow and bonded to the sensor carrier (4), so that the optical fibre lying underneath with the Bragg grating is fixed on the sensor carrier (4),
-- at each of both end portions of the optical fibre, i.e. at the respective coupling point with the signal line (3a, 3b), the protective cover is configured enlarged so that a cavity is formed underneath, and
-- the edges of the enlarged protective cover are bonded to the sensor carrier as well, wherein
- an elastic filler body (6) is arranged in the cavity and embeds the coupling point in a vibration damping manner.

2. FBG strain sensor arrangement (1) according to claim 1, wherein the sensor carrier (4) is narrower in the region of the optical fibre than in the region of the enlarged part of the protective cover.

3. FBG strain sensor arrangement (1) according to claim 1, wherein the protective cover is made of epoxy resin.

4. FBG strain sensor arrangement (1) according to claim 1, wherein the protective cover is configured semicircular.

5. FBG strain sensor arrangement (1) according to claim 1, wherein the optical signal lines (3a, 3b) comprise a steel reinforcement.

6. FBG strain sensor arrangement (1) according to claim 1, wherein the protective cover is configured maximal 3 times as wide and maximal 2.5 times as thick as the diameter of the optical fibre with the Bragg grating at least in the region of the Bragg grating.

7. FBG strain sensor arrangement (1) according to claim 1, wherein the sensor carrier (4) is configured as a triangle, with an FBG strain sensor (2) being fastened on each side of the triangle.

8. FBG strain sensor arrangement (1) according to claim 1, wherein the sensor carrier (4) is configured as a rectangle, with an FBG strain sensor (2) being fastened on each side of the rectangle.

## Revendications

1. Ensemble de capteur d'allongement FBG (1) avec un support de capteur (4) en tôle d'acier et au moins un capteur d'allongement FBG (2) fixé dessus, dans lequel
- le capteur d'allongement FBG (2) comprend une fibre optique avec deux sections d'extrémité, entre lesquelles est prévu au moins un réseau de Bragg et à chacune d'elles est couplée une ligne de signal optique (3a, 3b) servant à transmettre le signal de mesure, et
- une enveloppe de protection (5) est prévue, laquelle présente les caractéristiques suivantes:
-- le long de la fibre optique, l'enveloppe de protection (5) est conçue mince et étroite et est collée au support de capteur (4), de sorte que la fibre optique sous-jacente avec le réseau de Bragg soit fixée au support de capteur (4);
-- l'enveloppe de protection est conçue agrandie à chacune des deux sections d'extrémité de la fibre optique, c'est-à-dire au point de couplage respectif avec la ligne de signal (3a, 3b), de sorte qu'une cavité soit formée en dessous; et
-- les bords de l'enveloppe de protection agrandie sont également collés au support du capteur,
et dans lequel
- un corps de remplissage (6) élastique est disposé dans la cavité et enrobe le point de couplage de manière à amortir les vibrations.

2. Ensemble de capteur d'allongement FBG (1) selon la revendication 1, dans lequel le support de capteur (4) est plus étroit dans la région de la fibre optique que dans la région de la portion agrandie de l'enveloppe de protection.

3. Ensemble de capteur d'allongement FBG (1) selon la revendication 1, dans lequel l'enveloppe de protection se compose de résine époxy.

4. Ensemble de capteur d'allongement FBG (1) selon la revendication 1, dans lequel l'enveloppe de protection est de forme semi-circulaire.

5. Ensemble de capteur d'allongement FBG (1) selon la revendication 1, dans lequel les lignes de signal optique (3a, 3b) comprennent une armature d'acier.

6. Ensemble de capteur d'allongement FBG (1) selon la revendication 1, dans lequel, au moins dans la région du réseau de Bragg, l'enveloppe de protection est formée de façon à être au maximum 3 fois plus large et 2,5 fois plus épaisse que le diamètre de la fibre optique avec le réseau de Bragg.

7. Ensemble de capteur d'allongement FBG (1) selon la revendication 1, dans lequel le support de capteur (4) est réalisé sous forme de triangle et un capteur d'allongement FBG (2) est fixé sur chaque branche du triangle.

8. Ensemble de capteur d'allongement FBG (1) selon la revendication 1, dans lequel le support de capteur (4) est réalisé sous forme de rectangle et un capteur d'allongement FBG (2) est fixé sur chaque côté du rectangle.
